# EUROPÄISCHE PATENTSCHRIFT

(11) **EP 3 137 285 B1**
(45) Veröffentlichungstag und Bekanntmachung des Hinweises auf die Patenterteilung: **07.03.2018**
(21) Anmeldenummer: 15730469.2
(22) Anmeldetag: 16.06.2015
(51) Int. Cl.: B29C 64/205, B29C 64/153, B22F 3/105, B28B 1/00, B22F 3/16, B33Y 10/00, B33Y 30/00

(54) **PULVERBETTBASIERTES ADDITIVES FERTIGUNGSVERFAHREN UND ANLAGE ZUR DURCHFÜHRUNG DIESES VERFAHRENS**
POWDER BED-BASED, ADDITIVE PRODUCTION METHOD AND INSTALLATION FOR CARRYING OUT SAID METHOD
PROCÉDÉ DE FABRICATION ADDITIVE À BASE DE LIT PULVÉRULENT ET DISPOSITIF POUR LA MISE EN OEUVRE DU PROCÉDÉ

(30) Priorität: 25.06.2014 DE 102014212176
(43) Veröffentlichungstag der Anmeldung: 08.03.2017
(73) Patentinhaber: Siemens Aktiengesellschaft, 80333 München (DE)
(72) Erfinder: KÜSTERS, Yves, 10829 Berlin (DE); SCHÄFER, Martin, 10557 Berlin (DE)
(86) Internationale Anmeldenummer: PCT/EP2015/063440
(87) Internationale Veröffentlichungsnummer: WO 2015/197426

(56) Entgegenhaltungen:
- WO-A1-90/03893
- US-A1- 2010 006 228
- US-A1- 2011 122 381

## Beschreibung

Die Erfindung betrifft ein pulverbettbasiertes additives Fertigungsverfahren, bei dem wiederholt eine Lage eines Pulvers auf ein Pulverbett aufgetragen wird. Mit einem Energiestrahl wird das Pulver anschließend selektiv bei gleichzeitiger Ausbildung einer Lage eines herzustellenden Bauteils aufgeschmolzen. So entsteht in dem Pulverbett lagenweise das herzustellende Bauteil.

Weiterhin betrifft die Erfindung eine Anlage zur Durchführung eines pulverbettbasierten additiven Fertigungsverfahrens, auf weisend eine Prozesskammer, in der auf einer Bauplattform ein Pulverbett erzeugbar ist. In der Prozesskammer befindet sich weiterhin eine Dosiereinrichtung, mit der eine Lage auf einem auf der Bauplattform befindlichen Pulverbett erzeugbar ist. Ein pulverbettbasiertes additives Fertigungsverfahren und eine Anlage zur Durchführung desselben sind beispielsweise aus der US 2003/0074096 A1 bekannt. Um ein möglichst gleichmäßiges Pulverbett zu erzeugen, wird vorgeschlagen, dass das Pulver über eine Zuführleitung einzeln einem Array von Trichtern zugeführt wird, wobei die Trichter des Arrays örtlich für eine genaue Dosierung des Pulvers sorgen. Hierdurch kann insgesamt die gleichmäßige Auftragung des Pulvers über die gesamte Oberfläche des Pulverbetts gewährleistet werden. Allerdings müssen die einzelnen Trichter des Trichterarrays durch die Zuführvorrichtung für das Pulver einzeln angefahren werden, was im Betrieb eine gewisse Beschickungsdauer zur Folge hat.

Aus der 3D-Drucktechnik ist es gemäß der US 2002/0145213 A1 weiterhin bekannt, dass Pulver zum Drucken der einzelnen Lagen eines herzustellenden Bauteils mittels einer geeigneten Zuführvorrichtung zugeführt werden kann, wobei, wie bei Laserdruckern üblich, das Pulver der einzelnen Lagen durch eine elektrostatische Aufladung derjenigen Bereiche, die die Lage des herzustellenden Bauteils bilden sollen, vorläufig anhaften. Anschließend werden diese Partikel durch Energiezufuhr aufgeschmolzen.

Weiterhin ist es allgemein bekannt, dass das Pulver bei pulverbettbasierten additiven Fertigungsverfahren mittels einer Dosiervorrichtung auf das Pulverbett aufgestreut werden kann, wobei anschließend eine Rakel über die Oberfläche des Pulverbetts gezogen wird, um eine gleichmäßige Verteilung des Pulvers auf dem Pulverbett zu gewährleisten. Hierbei ist die Prozesssicherheit zur Herstellung eines glatten Pulverbetts jedoch begrenzt. Verschleißerscheinungen an der Rakel sowie Bauteilfehler an der Oberfläche können dazu führen, dass die Oberfläche des Pulverbetts uneben ausgebildet wird, z. B. Rillen oder Grate enthält. Diese führen beim anschließenden Aufschmelzen des Pulvers zu Ungenauigkeiten im hergestellten Bauteil. Um diese Effekte möglichst weit einzudämmen, werden Pulver mit einer hohen Pulvergüte verwendet, beispielsweise können gasverdüste Pulver Verwendung finden, wobei diese im Vergleich zu anderen Pulversorten teurer in der Anschaffung sind.

Gemäß der US 2010/0006228 A1 ist ein Verfahren zum Dosieren von Lagen für ein Pulverbett zum additiven Herstellen eines Bauteils beschrieben. Danach kommt eine Gleitplatte mit einer Dosieröffnung zum Einsatz, welche waagerecht über der Bauplatte bzw. dem Pulverbett verschoben werden kann. Dabei wird das in der Dosieröffnung der Platte befindliche Pulver auf dem Pulverbett als neue Lage gleichmäßig verteilt. Um eine Schüttdichte des Pulverbetts zu erhöhen, kann zusätzlich in der Dosieröffnung der gleitenden Platte ein Gewicht vorgesehen werden, welches die Pulverteilchen komprimiert.

Gemäß der US 2011/0122381 A1 kann alternativ zum Herstellen additiv gefertigter Teile im Pulverbett auch eine direkte Applikation der herzustellenden Lagen des Bauteils auf eine Walze erfolgen. Diese legt die herzustellende Bauteillage dann auf dem bereits hergestellten Bauteil ab und wird dort direkt verfestigt. Dieses Prinzip des 3D-Drucks ist mit dem Funktionsprinzip eines Fotokopierers vergleichbar.
Die Aufgabe der Erfindung besteht darin, ein eingangs angegebenes pulverbettbasiertes additives Fertigungsverfahren derart weiterzubilden, das eine zeitsparende Aufbringung von Pulver auf das Pulverbett möglich wird und dabei die Qualität des Pulverbetts insbesondere hinsichtlich der durch das Pulverbett ausgebildeten Oberfläche verbessert wird. Außerdem ist es Aufgabe der Erfindung, eine eingangs angegebene Anlage zur Durchführung eines pulverbettbasierten additiven Fertigungsverfahrens dahingehend auszustatten, dass ein solches verbessertes Verfahren mit dieser Anlage durchführbar ist. Diese Aufgabe wird mit einem Verfahren gemäß dem Anspruch 1 gelöst. Zum Auftragen der Lage auf das Pulverbett wird ein Trägerbauteil verwendet, mit dessen Hilfe sich eine vorgefertigte Lage als Ganzes auf das Pulverbett transferieren lässt. Hierbei werden folgende Schritte durchlaufen. Die aufzutragende Lage wird außerhalb des Pulverbetts ausgebildet und verdichtet. Hierzu muss eine geeignete Unterlage zur Verfügung stehen, wobei hierauf im Folgenden noch näher eingegangen wird. Die Verfestigung der Lage ist zumindest soweit notwendig, dass die Lage stabil genug ist, um mit geeigneten Hilfsmitteln auf das Pulverbett transferiert zu werden. In einem nächsten Schritt wird die ausgebildete Lage temporär an einem Trägerbauteil gehalten. Hierfür sind Haltekräfte notwendig, die von dem Trägerbauteil aufgebracht werden müssen (hierzu im Folgenden mehr). Weiterhin wird die ausgebildete Lage mit dem Trägerbauteil auf dem Pulverbett abgelegt. Dabei hängt die Lage sozusagen unter dem Trägerbauteil, damit diese von oben auf das Pulverbett aufgesetzt werden kann. Die bereits erwähnten Haltekräfte sorgen dafür, dass bei dieser Handhabungsbewegung des Trägerbauteils die Lage nicht herabstürzt.

Wurde die Lage auf dem Pulverbett abgelegt, so wird anschließend die temporäre Bindung zwischen der Lage und dem Trägerbauteil wieder gelöst. Dies erfolgt durch Aufheben der Haltekräfte. Das Trägerbauteil kann nun abgehoben werden und hinterlässt die Lage auf dem Pulverbett. Anschließend kann das additive Fertigungsverfahren weitergeführt werden, indem die das Bauteil ausbildenden Teilbereiche der Lage durch einen Energiestrahl aufgeschmolzen werden. Bevorzugt wird ein selektives Laserschmelzen oder ein selektives Elektronenstrahlschmelzen durchgeführt.

Die erfindungsgemäße Applikation einer Lage als Ganzes auf dem Pulverbett hat den Vorteil, dass diese nicht mit einer Rakel oder einem ähnlichen Werkzeug geglättet werden muss. Die vorläufige Verfestigung der Lage bereits vor der Halterung derselben auf dem Trägerbauteil hat den Vorteil, dass diese bei vorsichtiger Handhabung als Ganzes und nicht in Form individueller Pulverteilchen auf dem Pulverbett abgelegt werden kann. Nach Abheben des Trägerbauteils wird damit eine glatte Oberfläche des Pulverbetts freigelegt, welche vorteilhaft wesentlich glatter ist, als die nach herkömmlichen Verfahren hergestellte Oberfläche von Pulverbetten. Hierdurch lässt sich vorteilhaft ein gutes Bauteilergebnis durch das additive Fertigungsverfahren herstellen.

Gemäß einer vorteilhaften Ausgestaltung der Erfindung ist vorgesehen, dass für die Ausbildung der Lage eine Hilfsplatte zur Verfügung gestellt wird und die Lage anschließend mit dem Trägerbauteil von der Hilfsplatte abgenommen wird. Die Hilfsplatte kann vorteilhaft zur Applikation von Pulver mit dem an sich bekannten Dosierungsverfahren und anschließendem Rakeln erfolgen. Hierbei kann vorteilhaft auf den bestehenden Stand der Technik zurückgegriffen werden. Auch ist es möglich, bereits verwendete Anlagen zum additiven Fertigen, die Pulverdosiereinrichtungen und Rakeleinrichtungen aufweisen, mit der Hilfsplatte zu modifizieren, so dass diese herkömmlichen Anlagen mit dem verbesserten Verfahren betrieben werden können. Unebenheiten, die beim Rakeln der Lage auf der Hilfsplatte entstehen, sind für das zu erzeugende Bauteil unerheblich, weil diese anschließend durch Aufsetzen des Trägerbauteils auf die Pulverteilchen ausgeglichen werden.

Eine andere Ausbildung der Erfindung wird erhalten, wenn die Ausbildung der Lage mit dem Trägerbauteil erfolgt, indem die Lage als Ganzes durch Aufnehmen von Pulver aus einem Vorratspulverbett hergestellt wird. Das Vorratspulverbett bildet sozusagen ein komplementäres Pulverbett in der Prozesskammer der Anlage zum additiven Herstellen von Bauteilen. Es besitzt vorzugsweise dieselbe Oberflächenform und -größe wie das Pulverbett, so dass aus dem Vorratspulverbett Pulverlagen entnommen werden können, die genau in das Pulverbett zur Herstellung des betreffenden Bauteils passen. Dabei wird das Vorratspulverbett sukzessive Lage für Lage abgebaut, während das Pulverbett zur Herstellung des Bauteils Lage für Lage wächst.

Die Nutzung eines Vorratspulverbetts hat gleich mehrere Vorteile. Die benötigte Pulvermenge für ein herzustellendes Bauteil kann in Kenntnis des für die Herstellung de Bauteils erforderlichen Pulverbetts vorteilhaft genau dosiert werden. Außerdem kann die Aufnahme von Lagen mittels des Trägerbauteils vorteilhaft sehr schnell erfolgen, weil die Lage jeweils durch Aufsetzen des Trägerbauteils auf dem Hilfspulverbett als Ganzes hergestellt werden kann. Das Hilfspulverbett ist vorteilhaft auch viel einfacher aufgebaut, als die im Vergleich hierzu komplexen Dosiervorrichtungen und Rakelvorrichtungen, die vergleichsweise komplexe Bewegungsabläufe durchführen müssen.

Gemäß einer weiteren Ausbildung der Erfindung ist vorgesehen, dass das Pulver auf der Hilfsplatte oder dem Trägerbauteil nach dem Ausbilden der Lage mit einer Verdichterplatte verdichtet wird, indem diese auf die Lage gedrückt wird. Es wird also eine besondere Baueinheit in der Anlage zum additiven Herstellen von Bauteilen vorgesehen, die alleine den Zweck verfolgt, durch Andrücken der Partikel auf die Hilfsplatte oder das Trägerbauteil zu verdichten. Hierdurch wird die mechanische Stabilität der Lage vorteilhaft erhöht. Außerdem kann, wenn das Andrücken gegen das Trägerbauteil erfolgt, auch die Haltekraft des Trägerbauteils für die Lage z. B. durch Adhäsionseffekte verbessert werden.

Weiterhin kann vorteilhaft vorgesehen werden, dass das Pulver auf der Hilfsplatte nach dem Ausbilden der Lage mit dem Trägerbauteil verdichtet wird, indem dieses auf die Lage abgesenkt wird. Wird eine Hilfsplatte für die Ausbildung der Lage vorgesehen, so existiert vorteilhaft bereits eine Paarung von Bauteilen, mit denen eine Verdichtung der Lage erfolgen kann: nämlich das Trägerbauteil und die Hilfsplatte. In einem solchen Fall kann auf eine gesonderte Verdichterplatte vorteilhaft verzichtet werden. Durch ein Verdichten der auf der Hilfsplatte befindlichen vorläufigen Lage wird diese in einem Prozessschritt vorteilhaft auf das Trägerbauteil übertragen.

Besonders vorteilhaft ist es, wenn das Trägerbauteil und/oder die Hilfsplatte und/oder die Verdichterplatte (je nachdem welche dieser Bauteile in der Anlage zum Einsatz kommen) zur Unterstützung der Verdichtung des Pulvers mit mechanischen Schwingungen, insbesondere im Ultraschallbereich, beaufschlagt wird oder werden. Zu diesem Zweck müssen das Trägerbauteil und/oder die Hilfsplatte und/oder die Verdichterplatte mit einem Schwingungsgenerator mechanisch gekoppelt sein. Dieser kann beispielsweise aus einem Ultraschallkopf bestehen. Mechanische Schwingungen geringerer Frequenz können auch durch mechanische Schwingköpfe mit motorischem Antrieb generiert werden. Durch Einsatz eines Schwingungsgenerators wird die Verdichtung der Lage vorteilhaft unterstützt, wodurch diese eine größere mechanische Stabilität bekommt. Ein Schwingungsgenerator in dem Trägerbauteil kann überdies Verwendung finden, um nach Aufsetzen der Lage auf das Pulverbett eine Trennung des Trägerbauteils von der Lage zu unterstützen, indem Adhäsionskräfte zwischen den Partikeln und der Lage aufgehoben werden.

Gemäß einer besonderen Ausgestaltung der Erfindung ist vorgesehen, dass das Trägerbauteil ein zu ihrer Oberfläche hin offenes Kanalsystem aufweist, und die Lage mit Hilfe eines Vakuums an dem Trägerbauteil gehalten wird. Dieses Kanalsystem kann eine bestimmte Geometrie aufweisen. Alternativ ist es auch möglich, das Material des Trägerbauteils offenporig porös auszuführen, so dass die Poren sich auch zu der Oberfläche hin öffnen. Durch Anlegen eines Unterdrucks an die Oberfläche entsteht ein Vakuum, welches eine Haltekraft auf die ausgebildete Lage erzeugt. Die Lage selbst weist aufgrund einer Restporösität ebenfalls eine offenporige Struktur auf, so dass ein Leckagestrom durch die Lage hindurch entsteht. Dieser muss durch eine Vakuumpumpe, die an das Kanalsystem angeschlossen ist, ständig ausgeglichen werden. Die mechanische Stabilität der Lage gewährleistet hierbei, dass dieser durch die Leckage verursachte Volumenstrom nicht aufgelöst wird.

Alternativ kann gemäß einer anderen Ausgestaltung der Erfindung die Lage auch mit Hilfe magnetischer oder elektrostatischer Kräfte an dem Trägerbauteil gehalten werden. Zu diesem Zweck muss das Trägerbauteil selbst von einem Magnetfeld durchflutet werden, was durch einen externen Magneten auf der Rückseite des Trägerbauteils gewährleistet werden kann. Besonders vorteilhaft kann das Trägerbauteil auch aus einem ferromagnetischen Material wie Eisen hergestellt werden, damit das Magnetfeld an der Oberfläche des Trägerbauteil verstärkt wird. Durch Entfernen des Magnetfelds von dem Trägerbauteil bevorzugt durch Abschalten einer das Magnetfeld erzeugenden elektrischen Spule, kann die Haltekraft aufgehoben und die Lage auf dem Pulverbett abgelegt werden. Im Falle der Erzeugung elektrostatischer Kräfte muss das Material der Lage und/oder das Material des Trägerbauteils aus einem elektrischen Isolator gebildet sein, damit die Kontaktierung der Lage mit des Trägerbauteils nicht zu einem Elektronenfluss und damit Abbau der elektrostatischen Kräfte führt. Eine Aufhebung der elektrostatischen Kräfte wird dann durch geeignete Zuführungen von Elektronen in die Paarung zwischen Lage und Trägerbauteil bewerkstelligt.

Außerdem kann vorteilhaft vorgesehen werden, dass das Trägerbauteil und/oder die Hilfsplatte beheizt wird, während diese sich mit der Lage in Kontakt befinden. Durch Beheizen der Partikel kann zum einen der Verdichtungsprozess unterstützt werden. Außerdem kann die Lage vor dem Ablegen auf dem Pulverbett vorgewärmt werden, was Vorteile hinsichtlich der Erzeugung des Bauteils mittels des Energiestrahls mit sich bringt. Mit dem Energiestrahl muss dann vorteilhaft nur noch eine geringere Leistung in die Lage eingebracht werden, damit diese aufgeschmolzen wird. Auch die Ausbildung von Eigenspannungen in dem herzustellenden Bauteil können auf diesem Wege vermindert werden.

Vorteilhaft ist es auch, wenn die Dichte und/oder die Temperatur und/oder Druckunterschiede in der Lage sensorisch erfasst werden, während diese sich an der Hilfsplatte und/oder an des Trägerbauteils befindet. Die sensorische Erfassung erfolgt mittels geeigneter Sensoren, die an der Hilfsplatte und/oder an des Trägerbauteils angebracht sind. Die Sensoren müssen jeweils in dem Einflussbereich der zu messenden Größe angebracht sein. Ein Temperatursensor muss in zumindest indirektem thermischem Kontakt mit der Hilfsplatte oder des Trägerbauteils oder der Lage stehen. Druckunterschiede können ermittelt werden, indem Drucksensoren oberhalb und unterhalb der Lage angebracht sind. Dies kann beispielsweise dadurch erfolgen, dass jeweils Drucksensoren in der Hilfsplatte und der Verdichterplatte oder in der Verdichterplatte und des Trägerbauteils oder in der Hilfsplatte und des Trägerbauteils vorgesehen sind, je nachdem welche der genannten Plattenpaarungen für eine Verdichtung der Lage zum Einsatz kommt. Eine Dichteuntersuchung kann ganz einfach durch Messen der Lagendicke und der Gewichtskraft oder Masse des mit der Lage beaufschlagten Trägerbauteils erfolgen. Aussagen hinsichtlich der Dicke der Lage lassen Rückschlüsse auf das zu erreichende Ergebnis des additiven Herstellungsverfahrens zu.

Besonders vorteilhaft ist es, wenn die Lage nach dem Ablegen auf dem Pulverbett verdichtet wird. Dies kann beispielsweise mittels des Trägerbauteils erfolgen, bevor diese entfernt wird. Alternativ kann die Verdichtung der Lage im Pulverbett auch durch eine Verdichterplatte durchgeführt werden. Eine nachträgliche Verdichtung auf dem Pulverbett ist beispielsweise dann von Vorteil, wenn die vorausgehende Verdichtung nicht zu der erforderlichen Dichte der Lage geführt hat. Eine andere Möglichkeit besteht darin, nach Aufsetzen der Lage auf das Pulverbett eventuelle mechanische Instabilitäten (Risse, Unebenheiten), die während der Handhabung der Lage aufgetreten sind, noch auszugleichen. Auch bei der Verdichtung der Lage auf dem Pulverbett kann ein Schwingungserreger, insbesondere ein Ultraschallgenerator zum Einsatz kommen, der an des Trägerbauteils, an der Verdichterplatte oder in dem Pulverbett, z. B. an der das Pulverbett tragenden Bauplattform, angebracht ist.

Vorteilhaft kann zur Herstellung der Lage Pulver verwendet werden, bei dem die Partikeldurchmesser im Bereich von 2 Größenordnungen aufweisen. Hierbei handelt es sich um Pulversorten, die aufgrund der geringen Anforderungen an die Größenklassierung kostengünstig in der Beschaffung sind. Auch müssen keine (wie eingangs erwähnt) gasverdüsten Pulver verwendet werden. Im Gegenteil, Pulverteilchen mit einer unregelmä-ßigeren Oberfläche lassen sich effizienter zu einer mechanisch stabilen Lage verarbeiten, da sich die Pulverteilchen untereinander besser verkrallen. Auch das Vorliegen von Pulverteilchen unterschiedlicher Größe unterstützt den Prozess einer mechanischen Stabilisierung der Lage durch Verdichten, da kleinere Pulverteilchen, die Zwischenräume zwischen den größeren Pulverteilchen ausfüllen und damit eine größere Oberfläche zur Herstellung von vorläufigen Verbindungen zwischen den einzelnen Pulverteilchen zur Verfügung stehen.

Weiterhin wird die angegebene Aufgabe durch eine Anlage zur Durchführung eines pulverbettbasierten additiven Fertigungsverfahrens gemäß dem Anspruch 14 gelöst. Gemäß einer vorteilhaften Ausgestaltung der Anlage ist vorgesehen, dass außerdem eine Hilfsplatte zur vorläufigen Erzeugung der Lage und anschließenden Übertragung der Lage auf das Trägerbauteil und/oder eine Verdichterplatte zur Verdichtung der Lage vorgesehen ist. Wie das Trägerbauteil, die Verdichterplatte und die Hilfsplatte zum Einsatz gebracht werden können, ist vorstehend bei der Erläuterung des Verfahrens bereits ausführlich erklärt worden.
Gemäß einer anderen Ausgestaltung der Erfindung ist vorgesehen, dass das Trägerbauteil und/oder die Hilfsplatte und/oder die Verdichterplatte mit einer die Haftung des Pulvers vermindernden Schicht beschichtet ist (je nachdem welche dieser Bauteile zum Einsatz kommen). Bei der Hilfsplatte und der Verdichterplatte sind die Vorteile des Einsatzes einer haftungsvermindernden Schicht offenkundig. Die Lage soll an diesen Bauteilen möglichst wenig haften, da diese Bauteile nach Erfüllung ihres Einsatzzweckes wieder von der Lage entfernt werden sollen. Die haftungsvermindernde Schicht auf dem Trägerbauteil ist dann von Vorteil, wenn die Haltekräfte in genügender Weise bereits durch einen anderen Mechanismus (Vakuum, elektrostatische Kräfte, magnetische Kräfte) erzeugt werden. In diesem Falle ist es interessant, wenn sich das Trägerbauteil nach Abstellen dieser Haltekräfte möglichst leicht entfernen lässt. Hierdurch wird vorteilhaft auch die Oberfläche der Lage möglichst wenig beschädigt. Sollten allerdings die Haltekräfte aufgrund der Adhäsion von Pulverteilchen an des Trägerbauteils notwendig sein, damit die Lage zuverlässig transportiert werden kann, muss auf eine haftungsvermindernde Beschichtung des Trägerbauteils verzichtet werden.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben. Es zeigen:
- Figur 1 und 2: Ausführungsbeispiele der erfindungsgemäßen Anlage zur Durchführung des additiven Fertigungsverfahrens jeweils im schematischen Schnitt,
- Figur 3: ein Ausführungsbeispiel für ein Trägerbauteil, wie dieses in der Anlage gemäß Figur 1 und 2 zum Einsatz kommen kann und
- Figur 4 bis 10: ausgewählte Fertigungsschritte zweier Ausführungsbeispiele des erfindungsgemäßen Fertigungsverfahrens, wie dieses mit den Anlagen gemäß Figur 1 und 2 durchgeführt werden kann.

Eine Anlage zum Durchführen eines Laserschmelzens als pulverbettbasiertes additives Fertigungsverfahren weist eine Prozesskammer 11 auf, die ein Fenster 12 besitzt. Durch dieses Fenster kann ein Laserstrahl 13 über einen Umlenkspiegel 14 in die Prozesskammer 11 eingeleitet werden, wobei der Laserstrahl 13 durch eine Laserquelle 15 erzeugt wird. In der Prozesskammer 11 ist ein Pulverbett 16 vorgesehen, welches auf einer Bauplattform 17 ausgebildet wird. Mit Hilfe eines Aktors 18a kann die Bauplattform 17 schrittweise abgesenkt werden, damit das Pulverbett lagenweise ausgebildet werden kann. Mit Hilfe des Laserstrahls 13 wird in dem Pulverbett ein Bauteil 19 durch selektives Aufschmelzen der aktuellen Lage des Pulverbetts 16 erzeugt.

Als Dosiervorrichtung für neue Lagen 20 von Pulver ist ein Trägerbauteil 21 für die aktuell herzustellende Lage 20 vorgesehen. Dieses Trägerbauteil kann mittels eines Aktors 18b auf ein Vorratspulverbett 22 abgesenkt werden, um aus dem dort vorhandenen Pulvervorrat eine vollständige Lage 20 des Pulvers aufzunehmen. Während dieses Vorgangs kann über einen Aktor 18c eine Basisplatte 23 angehoben werden, die einen Anpressdruck des Vorratspulverbettes 22 an das Trägerbauteil 21 gewährleistet. Mittels des Aktors 18b kann das Trägerbauteil 21 anschließend von dem Vorratspulverbett 22 abgehoben und mittels eines Linearantriebs 24a in der Prozesskammer horizontal verfahren werden.

Durch horizontales Verfahren kann das Trägerbauteil 21 auch auf eine Verdichterplatte 25 abgesenkt werden, welche ihrerseits ebenfalls über einen Aktor 18d angehoben werden kann (der Aktor 18d ist optional, da die Relativbewegung auch durch eine Absenkung des Trägerbauteils 21 bewerkstelligt werden kann). Die Verdichterplatte 25 wirkt wie ein Stempel und kann zur Verdichtung der Lage 20 verwendet werden.

Weiterhin kann das Trägerbauteil 21 über das Pulverbett 16 gebracht und dort abgesenkt werden. Dies erlaubt ein Ablegen der Lage 20 auf dem Pulverbett 16, welche anschließend mittels des Laserstrahls 13 selektiv unter Ausbildung einer weiteren Lage des Bauteils 19 aufgeschmolzen werden kann. Um den Verdichtungsprozess zu unterstützen, sind an der Verdichterplatte 25 und an dem Trägerbauteil 21 Schwingungsgeneratoren 26 angebracht, die beispielsweise Ultraschall erzeugen können.

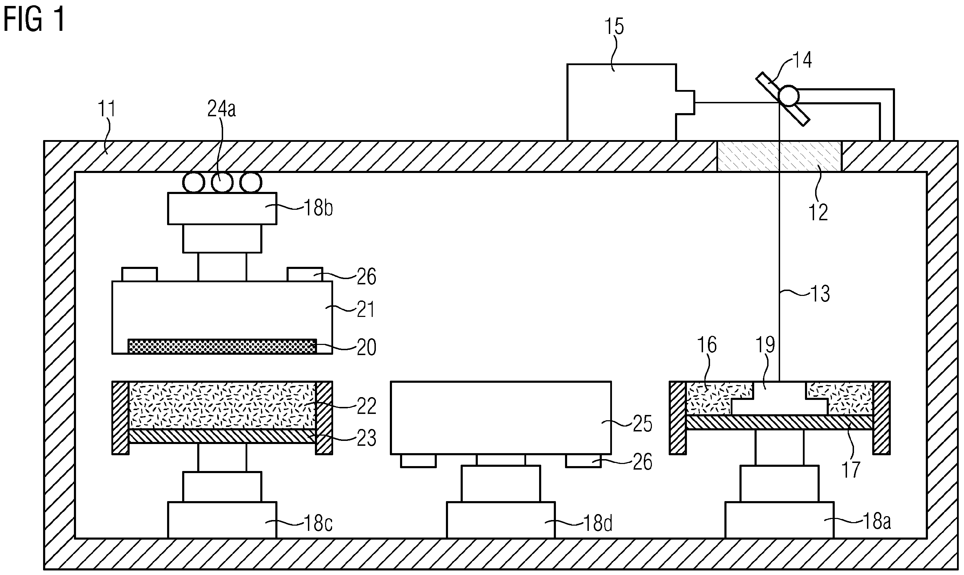

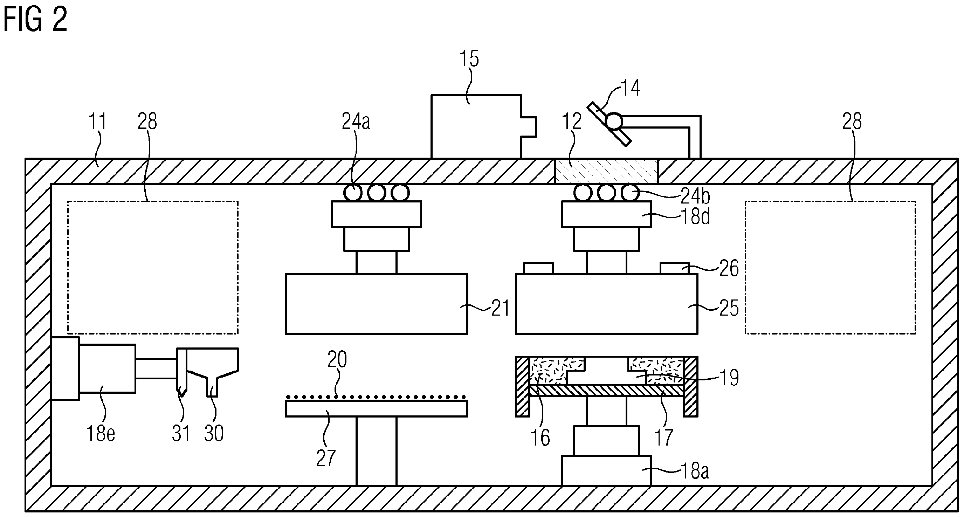

Die Anlage gemäß Figur 2 ist ähnlich aufgebaut wie die in Figur 1. Ein Unterschied ergibt sich dadurch, dass die Verdichterplatte 25 ähnlich wie das Trägerbauteil 21 mit dem Aktor 18d von oben abgesenkt werden kann. Zu diesem Zweck ist ein weiterer Linearantrieb 24b vorgesehen, damit die Verdichterplatte 25 über das Pulverbett 16 oder über eine Hilfsplatte 27 bewegt werden kann. Damit das Trägerbauteil 21 und die Verdichterplatte 25 sich nicht behindern, sind in der Prozesskammer für beide Baueinheiten Parkpositionen 28 vorgesehen, die durch eine Strichpunktlinie angedeutet sind.

Die Hilfsplatte 27 gemäß Figur 2 erfüllt folgenden Zweck. Auf dieser kann mittels einer konventionellen Dosiereinheit 29 für Pulver die Schicht 20 aufgetragen werden, so, als ob die Hilfsplatte das Pulverbett einer konventionellen Anlage darstellen würde. Dies hat den Vorteil, dass die Hilfsplatte immer einen völlig ebenen Untergrund zur Verfügung stellt, so dass auch das konventionelle Dosierverfahren zu hervorragenden Ergebnissen bei der Bildung der Schicht 20 führt. Die Dosiereinrichtung 29 wird mittels eines Aktors 18e über die Hilfsplatte gefahren, wobei aus einem Vorratsbehälter 30 Pulver auf die Hilfsplatte 27 rieselt, welches mit einer Rakel 31 mit einer ebenen Oberfläche versehen wird. Eventuelle Oberflächenfehler der Lage 20 werden spätestens durch Aufsetzen des Trägerbauteils 21 auf die Lage 20 ausgeglichen.

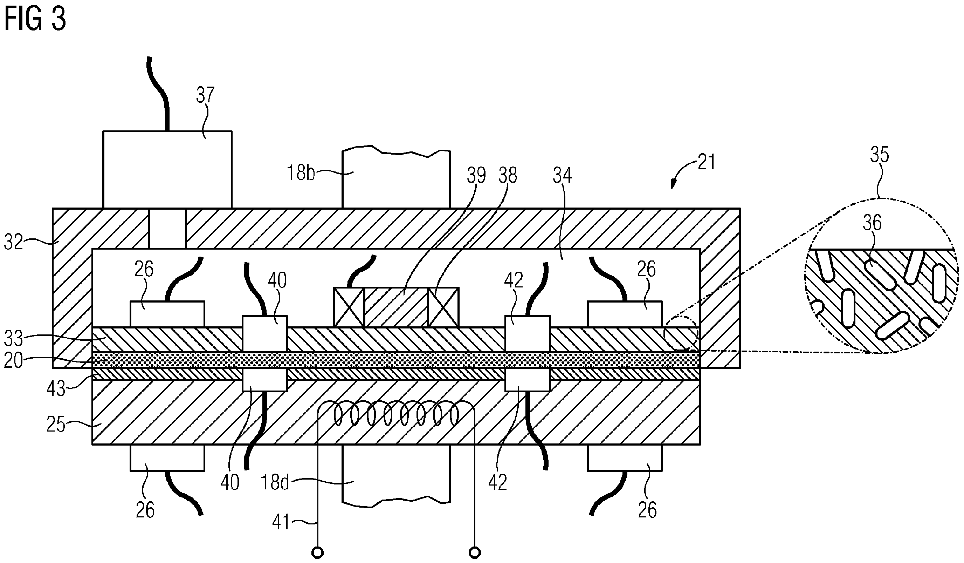

Der Aufbau des Trägerbauteils 21 lässt sich Figur 3 entnehmen. Dieses weist ein nach unten offenes Gehäusebauteil 32 auf, in das eine Platte 33 für die Aufnahme der Schicht 20 eingelassen ist. Hierdurch entsteht ein Hohlraum 34 oberhalb der Platte 33. Die Platte 33 ist, wie der Ausschnitt 35 zeigt, mit Poren 36 durchsetzt, die ein zusammenhängendes Kanalsystem in der Platte 36 ausbilden. Mittels einer Vakuumpumpe 37 kann der Hohlraum 34 evakuiert werden, wodurch über das offene Kanalsystem der Poren 36 ein Unterdruck erzeugbar ist, der die Lage 21 an die Platte 35 bindet.

Alternativ könnte bei einem magnetischen Pulver über eine Spule 38 und einen Kern 39 ein Magnetfeld aufgebaut werden, welches zu magnetische Haltekräfte für die Lage 20 erzeugt. Nicht dargestellt ist weiterhin die Möglichkeit, die Platte 33 elektrostatisch aufzuladen, so dass die Lage 20 aufgrund elektrostatischer Kräfte an die Platte 33 gebunden wird. Nicht zuletzt kann auch ein Anpressdruck, der durch die Verdichterplatte 25 ausgeübt wird, zu einer Adhäsion der Partikel der Lage 20 untereinander und an der Platte 33 führen, wodurch Haltekräfte für die Lage 20 an der Platte 33 erzeugt werden. Der Verdichtungsprozess kann durch die Schwingungsgeneratoren 26 unterstützt werden.

Weiterhin ist dargestellt, dass in die Verdichterplatte 25 und das Trägerbauteil 21 Sensoren integriert werden können. Beispielsweise kann über Drucksensoren 40 ein Druckunterschied aufgrund des Vakuums im Hohlraum 34 im Vergleich zur Außenwelt ermittelt werden, um die Haltekraft aufgrund es Vakuums zu beurteilen. Falls eine Vorheizung der Lage 20 mittels einer Heizeinrichtung 41 erfolgen soll, kann über Temperatursensoren 42 eine Temperatur der Lage 20 ermittelt werden. In vergleichbarer Weise kann eine Heizeinrichtung auch in der Platte 33 vorgesehen werden (nicht dargestellt). Die Sensoren, Heizeinrichtungen und Schwingungsgeneratoren, wie in Figur 3 dargestellt, können in vergleichbarer Weise auch in die Hilfsplatte 27 eingefügt werden.

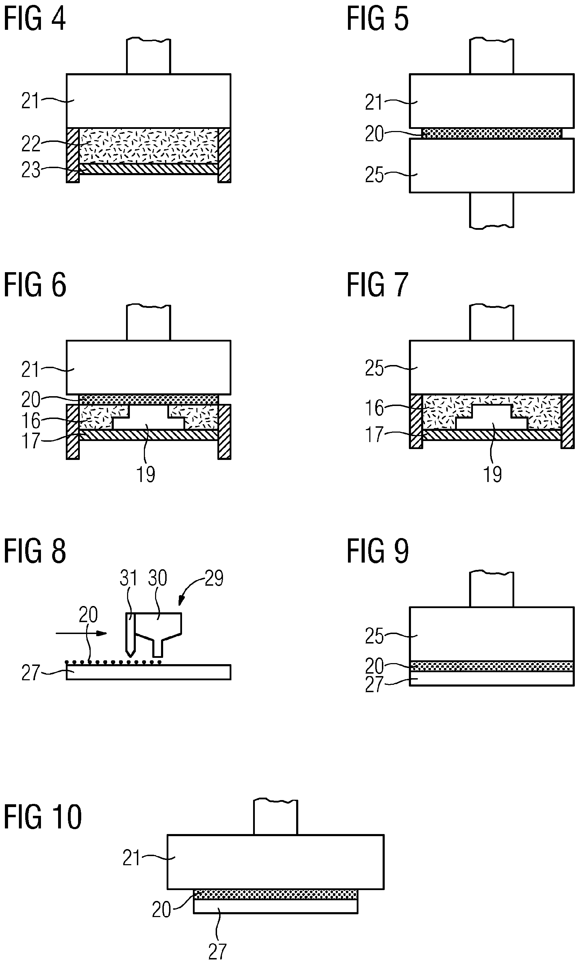

Den Verfahrensablauf für die Herstellung von Lagen 20 auf dem Pulverbett 16 lässt sich den Figuren 4 bis 10 entnehmen. Gemäß Figur 4 kann eine Lage beispielsweise durch Aufsetzen des Trägerbauteils 21 auf das Vorratspulverbett 22 erzeugt werden. Von diesem wird mittels des Trägerbauteils 21 eine Lage 20 abgenommen, wie sich Figur 5 entnehmen lässt. Diese Lage kann mit der Verdichterplatte 25 gemäß Figur 5 verdichtet werden, wobei der Verdichtungsprozess mit den zu Figur 3 beschriebenen mechanischen Einrichtungen unterstützt werden kann (beispielsweise durch Generierung von Ultraschall). Gemäß Figur 6 ist dargestellt, wie die Lage 20 auf dem Pulverbett 16 abgesetzt werden kann, indem das Bauteil 19 generativ hergestellt werden soll. Das Absetzen der Lage 20 kann beispielsweise durch die zu Figur 3 beschriebenen Schallgeneratoren 26, die in Figur 6 nicht dargestellt sind, unterstützt werden. Alternativ kann durch Abschalten der Spule 38 gemäß Figur 3 ein magnetisches Feld abgeschaltet werden, damit die Fixierung der Lage 20 am Trägerbauteil 21 aufgehoben wird.

Figur 7 lässt sich entnehmen, dass die Lage 20, die gemäß Figur 7 bereits Teil des Pulverbettes 16 geworden ist und daher nicht mehr gesondert erkennbar ist, mit der Verdichterplatte 25 von oben verdichtet werden kann.

In Figur 8 ist dargestellt, wie die Lage 20 mit der Hilfsplatte 27 hergestellt werden kann. Auf dieser wird mit der Dosiereinrichtung 29 Pulver auf der Hilfsplatte 27 abgelegt. Gemäß Figur 9 wird dieses Pulver anschließend mittels der Verdichterplatte 25 verfestigt, wobei hierbei die zu Figur 3 beschriebenen Hilfsmittel zum Einsatz kommen können, die in Figur 9 nicht näher dargestellt sind. Die verdichtete Lage 20 kann anschließend mit Hilfe des Trägerbauteils 21 von der Hilfsplatte 27 abgehoben werden. Auch hier können die Hilfsmittel gemäß Figur 3 zum Einsatz kommen, die in Figur 10 nicht näher dargestellt sind.

## Patentansprüche

1. Pulverbettbasiertes additives Fertigungsverfahren, bei dem wiederholt
- eine Lage (20) eines Pulvers auf ein Pulverbett (16) aufgetragen wird,
- mit einem Energiestrahl (13) das Pulver selektiv bei gleichzeitiger Ausbildung einer Lage (20) eines herzustellenden Bauteils (19) aufgeschmolzen wird,
wobei zum Auftragen der Lage (20) auf das Pulverbett
- die aufzutragende Lage (20) außerhalb des Pulverbettes (16) ausgebildet und verdichtet wird,
- die ausgebildete Lage (20) temporär an einem Trägerbauteil (21) gehalten wird, wobei die Lage (20) unter dem Trägerbauteil (21) hängt,
- die ausgebildete Lage (20) mit dem Trägerbauteil (21) auf dem Pulverbett (16) abgelegt wird, indem das Trägerbauteil (21) von oben auf das Pulverbett (16) aufgesetzt wird, und
- die temporäre Bindung zwischen der Lage (20) und dem Trägerbauteil (21) gelöst wird.

2. Fertigungsverfahren nach Anspruch 1,
**dadurch gekennzeichnet,**
**dass** für die Ausbildung der Lage (20) eine Hilfsplatte (27) zur Verfügung gestellt wird und die Lage (20) anschließend mit dem Trägerbauteil (21) von der Hilfsplatte (27) abgenommen wird.

3. Fertigungsverfahren nach Anspruch 1,
**dadurch gekennzeichnet,**
**dass** die Ausbildung der Lage (20) mit dem Trägerbauteil (21) erfolgt, indem die Lage (20) als Ganzes durch Aufnehmen von Pulver aus einem Vorratspulverbett (22) hergestellt wird.

4. Fertigungsverfahren nach einem der Ansprüche 2 oder 3,
**dadurch gekennzeichnet,**
**dass** das Pulver auf der Hilfsplatte (27) oder dem Trägerbauteil (21) nach dem Ausbilden der Lage (20) mit einer Verdichterplatte (25) verdichtet wird, indem diese auf die Lage (20) gedrückt wird.

5. Fertigungsverfahren nach Anspruch 2,
**dadurch gekennzeichnet,**
**dass** das Pulver auf der Hilfsplatte (27) nach dem Ausbilden der Lage (20) mit dem Trägerbauteil (21) verdichtet wird, indem dieses auf die Lage abgesenkt wird.

6. Fertigungsverfahren nach einem der Ansprüche 4 oder 5,
**dadurch gekennzeichnet,**
**dass** das Trägerbauteil (21) und/oder die Hilfsplatte (27) und/oder die Verdichterplatte (25) zur Unterstützung der Verdichtung des Pulvers mit mechanischen Schwingungen, insbesondere im Ultraschallbereich, beaufschlagt wird/werden.

7. Fertigungsverfahren nach einem der voranstehenden Ansprüche,
**dadurch gekennzeichnet,**
**dass** das Trägerbauteil (21) ein zu ihrer Oberfläche hin offenes Kanalsystem (36) aufweist, und die Lage (20) mit Hilfe eines Vakuums an dem Trägerbauteil (21) gehalten wird.

8. Fertigungsverfahren nach einem der voranstehenden Ansprüche,
**dadurch gekennzeichnet,**
**dass** die Lage (20) mit Hilfe magnetischer oder elektrostatischer Kräfte an dem Trägerbauteil (21) gehalten wird.

9. Fertigungsverfahren nach einem der voranstehenden Ansprüche,
**dadurch gekennzeichnet,**
**dass** das Trägerbauteil (21) und/oder die Hilfsplatte (27) beheizt wird, während diese sich mit der Lage (20) in Kontakt befinden.

10. Fertigungsverfahren nach einem der voranstehenden Ansprüche,
**dadurch gekennzeichnet,**
**dass** die Dichte und/oder die Temperatur und/oder Druckunterschiede in der Lage (20) sensorisch erfasst werden, während diese sich an der Hilfsplatte (27) und/oder an dem Trägerbauteil (21) und/oder an der Verdichterplatte (25) befindet.

11. Fertigungsverfahren nach einem der voranstehenden Ansprüche,
**dadurch gekennzeichnet,**
**dass** die Lage (20) nach dem Ablegen auf dem Pulverbett (16) verdichtet wird.

12. Fertigungsverfahren nach Anspruch 4 oder 11
**dadurch gekennzeichnet,**
**dass** die Verdichtung der Lage (20) im Pulverbett (16) mit einer Verdichterplatte (25) erfolgt.

13. Fertigungsverfahren nach einem der voranstehenden Ansprüche,
**dadurch gekennzeichnet,**
**dass** zur Herstellung der Lage Pulver verwendet wird, bei dem die Partikel Partikeldurchmesser im Bereich von zwei Größenordnungen aufweisen.

14. Anlage zur Durchführung eines pulverbettbasierten additiven Fertigungsverfahrens, aufweisend eine Prozesskammer (11)
- in der auf einer Bauplattform (17) ein Pulverbett (16) erzeugbar ist und
- in der sich eine Dosiereinrichtung befindet, mit der eine Lage (20) auf einem auf der Bauplattform befindlichen Pulverbett erzeugbar ist,
**dadurch gekennzeichnet,**
**dass** in der Prozesskammer (11) als Dosiereinrichtung ein Trägerbauteil (21) vorgesehen ist,
- auf dem die Lage (20) erzeugbar und unter dem Trägerbauteil (21) hängend fixierbar ist,
- welches mit der Lage (20) voran von oben auf das Pulverbett absenkbar ist.

15. Anlage nach Anspruch 14,
**dadurch gekennzeichnet,**
**dass** außerdem
- eine Hilfsplatte (27) zur vorläufigen Erzeugung der Lage (20) und anschließenden Übertragung der Lage (20) auf das Trägerbauteil (21) und/oder
- eine Verdichterplatte (25) zur Verdichtung der Lage (20) vorgesehen ist.

16. Anlage nach einem der Ansprüche 14 oder 15,
**dadurch gekennzeichnet,**
**dass** das Trägerbauteil (21) und/oder die Hilfsplatte (27) und/oder die Verdichterplatte (25) mit einer die Haftung des Pulvers vermindernden Schicht (43) beschichtet ist.

## Claims

1. Powder-bed-based additive production method, in which repeatedly
- a layer (20) of a powder is applied onto a powder bed (16),
- using an energy beam (13), the powder is fused selectively, with the simultaneous formation of a layer (20) of a component (19) to be produced,
wherein, to apply the layer (20) onto the powder bed
- the layer (20) to be applied is formed and compacted outside of the powder bed (16),
- the layer (20) formed is temporarily held on a substrate component (21), wherein the layer (20) hangs below the substrate component (21),
- the layer (20) formed is deposited with the substrate component (21) on the powder bed (16), in that the substrate component (21) is placed onto the powder bed (16) from above, and
- the temporary bond between the layer (20) and the substrate component (21) is dissolved.

2. Production method according to Claim 1,
**characterized**
**in that** an auxiliary plate (27) is provided for forming the layer (20) and the layer (20) is subsequently removed from the auxiliary plate (27) with the substrate component (21).

3. Production method according to Claim 1,
**characterized**
**in that** the formation of the layer (20) takes place with the substrate component (21) in that the layer (20) is produced as a single entity by picking up powder from a supply powder bed (22).

4. Production method according to one of Claims 2 or 3,
**characterized**
**in that** the powder is compacted on the auxiliary plate (27) or the substrate component (21) after the formation of the layer (20) using a compacting plate (25), in that the compacting plate is pressed onto the layer (20).

5. Production method according to Claim 2,
**characterized**
**in that** the powder is compacted on the auxiliary plate (27) after the formation of the layer (20) using the substrate component (21), in that the substrate component is lowered onto the layer.

6. Production method according to one of Claims 4 or 5,
**characterized**
**in that** the substrate component (21) and/or the auxiliary plate (27) and/or the compacting plate (25) is/are loaded with mechanical vibrations, particularly in the ultrasonic range, to support the compacting of the powder.

7. Production method according to one of the preceding claims,
**characterized**
**in that** the substrate component (21) has a channel system (36) which is open towards the surface thereof, and the layer (20) is held on the substrate component (21) with the aid of a vacuum.

8. Production method according to one of the preceding claims,
**characterized**
**in that** the layer (20) is held on the substrate component (21) with the aid of magnetic or electrostatic forces.

9. Production method according to one of the preceding claims,
**characterized**
**in that** the substrate component (21) and/or the auxiliary plate (27) is heated whilst the same are in contact with the layer (20).

10. Production method according to one of the preceding claims,
**characterized**
**in that** the density and/or the temperature and/or pressure differences in the layer (20) are detected sensorially, whilst the same is located on the auxiliary plate (27) and/or on the substrate component (21) and/or on the compacting plate (25).

11. Production method according to one of the preceding claims,
**characterized**
**in that** the layer (20) is compacted after deposition on the powder bed (16).

12. Production method according to Claim 4 or 11,
**characterized**
**in that** the compacting of the layer (20) takes place in the powder bed (16) using a compacting plate (25).

13. Production method according to one of the preceding claims,
**characterized**
**in that** powder is used to produce the layer, in which powder the particles have particle diameters in the region of two orders of magnitude.

14. Installation for carrying out a powder-bed-based additive production method, having a processing chamber (11)
- in which a powder bed (16) can be generated on a building platform (17), and
- in which there is a dosing device, using which a layer (20) can be generated on a powder bed located on the building platform,
**characterized**
**in that** a substrate component (21) is provided as dosing device in the processing chamber (11),
- on which the layer (20) can be generated and fixed so as to hang below the substrate component (21),
- which can be lowered, with the layer (20) first onto the powder bed from above.

15. Installation according to Claim 14,
**characterized**
**in that** in addition
- an auxiliary plate (27) is provided for provisionally generating the layer (20) and subsequently transferring the layer (20) onto the substrate component (21) and/or
- a compacting plate (25) is provided for compacting the layer (20).

16. Installation according to one of Claims 14 or 15,
**characterized**
**in that** the substrate component (21) and/or the auxiliary plate (27) and/or the compacting plate (25) is coated with a layer (43) reducing the adhesion of the powder.

## Revendications

1. Procédé de fabrication additive à base de lit de poudre, dans lequel d'une manière répétée
- on dépose une couche (20) d'une poudre sur un lit (16) de poudre,
- par un faisceau (13) d'énergie, on fait fondre la poudre sélectivement tout en constituant une couche (20) d'un composant (19) à produire,
dans lequel, pour déposer la couche (20) sur le lit de poudre
- on constitue et on densifie la couche (16) à déposer à l'extérieur du lit (16) de poudre,
- on maintient la couche (20) constituée temporairement sur un composant (21) de support, la couche (20) pendant sous le composant (21) de support,
- on dépose la couche (20) constituée avec le composant (21) de support sur le lit (16) de poudre, en mettant le composant (21) de support par le haut sur le lit (16) de poudre et
- on fait cesser la liaison temporaire entre la couche (20) et le composant (21) de support.

2. Procédé de fabrication suivant la revendication 1,
**caractérisé**
**en ce que**, pour constituer la couche (20), on met à disposition un plateau (27) auxiliaire et on retire la couche (20) ensuite avec le composant (21) de support du plateau (27) auxiliaire.

3. Procédé de fabrication suivant la revendication 1,
**caractérisé**
**en ce que** l'on constitue la couche (20) avec le composant (21) de support en produisant la couche (20) sous la forme d'un tout par absorption de poudre d'un lit (22) de poudre de réserve.

4. Procédé de fabrication suivant l'une des revendications 2 ou 3,
**caractérisé**
**en ce qu'**après avoir constitué la couche (20), on densifie la poudre sur le plateau (27) auxiliaire ou sur le composant (21) de support par un plateau (25) de compression, en poussant celui-ci sur la couche (20).

5. Procédé de fabrication suivant la revendication 2,
**caractérisé**
**en ce que** l'on densifie la poudre sur le plateau (27) auxiliaire après avoir constitué la couche (20) avec le composant (21) de support, en abaissant celui-ci sur la couche.

6. Procédé de fabrication suivant l'une des revendications 4 ou 5,
**caractérisé**
**en ce que** l'on soumet le composant (21) de support et/ou le plateau (27) auxiliaire et/ou le plateau (25) de compression, pour favoriser la densification de la poudre à des oscillations mécaniques, notamment dans le domaine des ultrasons.

7. Procédé de fabrication suivant l'une des revendications précédentes,
**caractérisé**
**en ce que** le composant (21) de support a un système (36) de conduit débouchant à sa surface et on maintient la couche sur le composant (21) de support à l'aide d'un vide.

8. Procédé de fabrication suivant l'une des revendications précédentes,
**caractérisé**
**en ce que** l'on maintient la couche (20) sur le composant (21) de support à l'aide de forces magnétiques ou électrostatiques.

9. Procédé de fabrication suivant l'une des revendications précédentes,
**caractérisé**
**en ce que** l'on chauffe le composant (21) de support et/ou le plateau (27) auxiliaire pendant que ceux-ci sont en contact avec la couche (20).

10. Procédé de fabrication suivant l'une des revendications précédentes,
**caractérisé**
**en ce que** l'on détecte par capteur la masse volumique et/ou la température et/ou les différences de pression dans la couche (20) pendant que celle-ci se trouve sur le plateau (27) auxiliaire et/ou sur le composant (21) de support et/ou sur le plateau (25) de compression.

11. Procédé de fabrication suivant l'une des revendications précédentes,
**caractérisé**
**en ce que** l'on densifie la couche (20) après le dépôt sur le lit (16) de poudre.

12. Procédé de fabrication suivant la revendication 4 ou 11,
**caractérisé**
**en ce que** la densification de la couche (20) s'effectue dans le lit (16) de poudre par un plateau (25) de compression.

13. Procédé de fabrication suivant l'une des revendications précédentes,
**caractérisé**
**en ce que**, pour produire la couche, on utilise de la poudre dans laquelle les particules ont des diamètres dans la plage de deux ordres de grandeur.

14. Installation pour effectuer un procédé de fabrication additif à base de lit de poudre, comportant une chambre (11) de processus
- dans laquelle un lit (16) de poudre peut être produit sur une plateforme (17) et
- dans laquelle se trouve un dispositif d'addition dosée, par lequel une couche (20) peut être produite sur un lit de poudre se trouvant sur la plateforme,
**caractérisée**
**en ce qu'**il est prévu dans la chambre (11) de processus, comme dispositif d'addition dosée, un composant (21) de support,
- sur lequel la couche (20) peut être produite et peut être immobilisée en pendant sous le composant (21) de support,
- qui peut être abaissé avec la couche (20) auparavant par le haut sur le lit de poudre.

15. Installation suivant la revendication 14,
**caractérisée**
**en ce qu'**il est prévu en outre
- un plateau (27) auxiliaire pour le renouvellement provisoire de la couche (20) et ensuite le transfert de la couche (20) au composant (21) de support et/ou
- un plateau (25) de compression pour densifier la couche (20).

16. Installation suivant l'une des revendications 14 ou 15,
**caractérisée**
**en ce que** le composant (21) de support et/ou le plateau (27) auxiliaire et/ou le plateau (25) de compression sont revêtus d'une couche (43) diminuant l'adhérence de la poudre.
